Europäisches Patentamt

European Patent Office

Office européen des brevets

(19)

(11) Numéro de publication : **0 317 424 B1**

(12) **FASCICULE DE BREVET EUROPEEN**

(45) Date de publication du fascicule du brevet :
29.01.92 Bulletin 92/05

(51) Int. Cl.⁵ : **B60G 17/04, F16L 39/00**

(21) Numéro de dépôt : 88402869.7

(22) Date de dépôt : 15.11.88

(54) **Dispositif de raccordement étanche entre un corps et un arbre monté dans ce corps, et cylindre de suspension de véhicule automobile utilisant ce dispositif.**

(30) Priorité : 20.11.87 FR 8716113

(43) Date de publication de la demande :
24.05.89 Bulletin 89/21

(45) Mention de la délivrance du brevet :
29.01.92 Bulletin 92/05

(84) Etats contractants désignés :
DE GB IT

(56) Documents cités :
EP-A- 0 190 944
GB-A- 2 175 363
US-A- 3 640 299

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Petiot, Jean-Paul**
**42 Route d'Orsay**
**F-91460 Marcoussis (FR)**

(74) Mandataire : **Durand, Yves Armand Louis et al**
**CABINET WEINSTEIN 20, Avenue de**
**Friedland**
**F-75008 Paris (FR)**

EP 0 317 424 B1

# Description

La présente invention a essentiellement pour objet un dispositif de raccordement étanche entre un corps et un arbre monté dans ce corps.

Elle vise également un cylindre de suspension de véhicule automobile équipé d'un tel dispositif de raccordement.

On a déjà proposé d'alimenter en fluide hydraulique un arbre muni d'une pluralité de conduits internes parallèles à l'axe de l'arbre et avec lesquels communiquent respectivement plusieurs passages de fluide pratiqués dans un corps dans lequel est monté l'arbre.

Pour alimenter un tel arbre, il est généralement nécessaire de prévoir une étanchéité entre chaque passage de fluide dans le corps et le conduit de l'arbre communiquant avec ce passage.

Jusqu'à présent (voir par exemple EP-A-0190944 correspondant au préambule de la revendication 1), une telle étanchéité était réalisée à l'aide de joints toriques entourant l'arbre et logés dans des gorges annulaires pratiquées dans le corps.

Comme on le comprend, une telle étanchéité exige une multiplicité de joints toriques étagés pour réaliser l'étanchéité entre les divers conduits dans l'arbre et les passages dans le corps qui leur sont respectivement associés et sont eux aussi étagés.

Par conséquent, une telle disposition exige une longueur importante, ce qui est inacceptable dans le cas d'une suspension automobile.

Il convient donc de proposer un dispositif de raccordement étanche entre plusieurs conduits dans l'arbre et plusieurs passages dans le corps, qui présente une hauteur minimum et réduite à celle que représenterait le raccordement étanche entre un seul passage dans le corps et un conduit dans l'arbre.

La présente invention parvient à ce but.

A cet effet, l'invention a pour objet un dispositif de raccordement étanche entre un corps et un arbre monté dans ce corps, et du type comprenant des moyens assurant l'étanchéité du raccordement entre plusieurs conduits ménagés dans l'arbre et plusieurs entrées de fluide ménagées dans le corps et communiquant respectivement avec lesdits conduits, caractérisé en ce que lesdits moyens d'étanchéité sont agencés de telle manière que les entrées de fluide dans le corps sont toutes réparties radialement dans un même plan perpendiculaire à l'arbre.

On comprend donc que l'agencement particulier des moyens d'étanchéité est tel que toutes les alimentations en fluide hydraulique de l'arbre sont situées à un même niveau et suivant une même hauteur qu'une alimentation unique. Autrement dit, on dispose d'une longueur utile d'arbre plus grande qu'auparavant, ce qui signifie que, dans le cas de l'application du dispositif à un cylindre de suspension, la course de suspension n'est pas réduite et il n'est pas nécessaire d'augmenter la longueur de l'empilage réalisant l'étanchéité et donc de réhausser l'attache supérieure à l'aile du véhicule ce qui nuirait au style de ce véhicule.

Suivant une autre caractéristique de ce dispositif, les moyens d'étanchéité précités sont constitués par des joints toriques montés respectivement dans des orifices ménagés radialement dans une douille interposée entre l'arbre et le corps, chaque orifice assurant la communication entre un conduit de l'arbre et une entrée de fluide du corps.

Les joints toriques possèdent en section transversale un diamètre supérieur à l'épaisseur de la douille.

Ces joints toriques peuvent être munis d'une queue permettant leur orientation par rapport aux orifices de la douille dans lesquels ils sont montés.

Selon encore une autre caractéristique de l'invention, la douille précitée est fendue et réalisée par enroulement d'une tôle plane découpée à la forme et percée pour réaliser les orifices précités.

On précisera encore ici que les joints toriques peuvent être adhérisés à la douille avant enroulement de la tôle.

La douille peut avantageusement présenter une forme tronconique de même que l'extrémité de l'arbre engagée dans le corps, ce qui facilite le montage.

L'invention vise également un cylindre de suspension pour véhicule automobile, qui est équipé d'un dispositif de raccordement répondant aux caractéristiques ci-dessus.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue partielle et en coupe axiale du dispositif conforme à cette invention ;

La figure 2 est une vue en coupe suivant la ligne II-II de la figure 1 ;

La figure 3 est une vue en perspective d'une douille apte à réaliser l'étanchéité entre plusieurs conduits ménagés dans l'arbre et plusieurs entrées de fluide ménagées dans le corps ;

La figure 4 est une vue en section transversale de la douille avec ses joints en position montée ;

La figure 5 est une vue en plan d'un joint torique; et

La figure 6 est une vue en plan d'une tôle découpée destinée à former la douille.

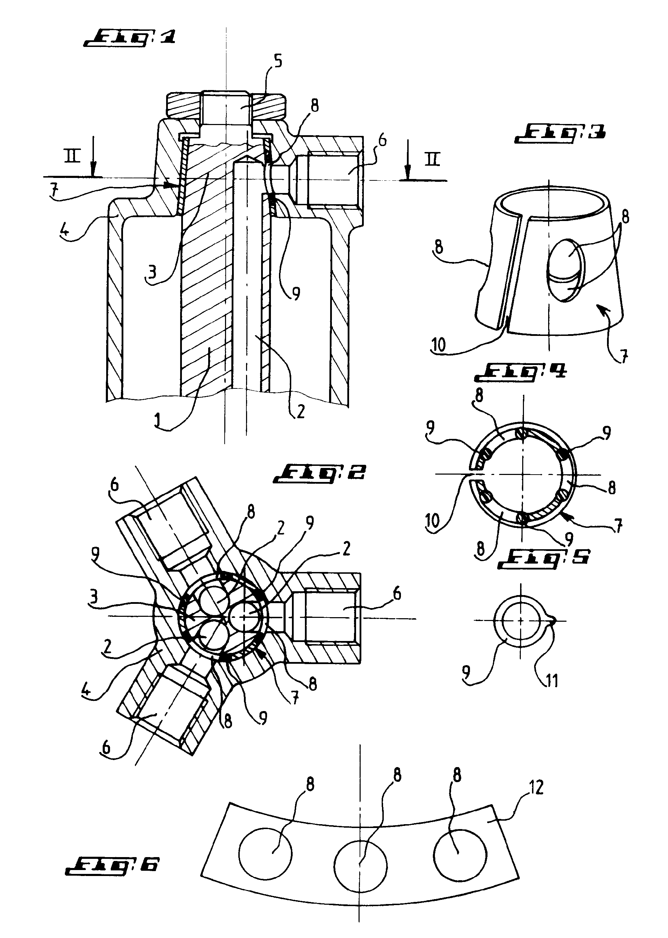

En se reportant aux figures 1 et 2, on voit un arbre 1 comportant axialement une pluralité de conduits 2, à savoir trois conduits suivant l'exemple de réalisation représenté, et dont l'extrémité 3 est engagée dans et solidaire d'un corps ou bâti 4 au moyen d'un boulon 5 par exemple.

Le corps 4 est muni d'une pluralité de perçages 6 communiquant respectivement avec les conduits 2 dans l'arbre 1 et munis d'un filetage interne pour permettre le raccordement avec des circuits d'alimentation en fluide hydraulique (non représentés).

Conformément à l'invention, et comme on le voit bien sur la figure 2, les moyens de raccordement étanche entre les perçages ou entrées de fluide 6 et leurs conduits 2 associés sont tels qu'ils permettent une répartition radiale et dans un même plan perpendiculaire à l'arbre 1, des entrées de fluide 6.

Ces moyens de raccordement étanche sont constitués de préférence par une douille 7 comportant une pluralité d'orifices radiaux 8 dans chacun desquels est monté un joint torique 9, ladite douille étant interposée entre l'extrémité 3 de l'arbre 1 et le corps ou bâti 4.

Suivant l'exemple de réalisation représenté, la douille 7 comporte trois orifices 8 assurant respectivement la communication entre les trois entrées de fluide 6 du corps 4 et les trois conduits 2 de l'arbre 1, comme on le voit bien sur la figure 2.

La douille 7 peut présenter toute forme appropriée, sans sortir du cadre de l'invention, c'est-à-dire être cylindrique ou conique, comme on le voit sur la figure 3. Elle peut être fendue comme on l'a montré en 10 sur les figures 3 et 4, ou bien elle peut être fermée.

Comme on le voit bien sur la figure 4 montrant une section transversale de la douille, les joints toriques 9 montés dans les orifices 8 possèdent, en section transversale, un diamètre supérieur à l'épaisseur de la douille lorsque celle-ci est à l'état non monté.

Les joints toriques 9, comme on le voit sur la figure 5, peuvent comporter une queue 11 permettant leur orientation dans les orifices 8 de la douille 7 lors du montage. Les joints toriques 9 peuvent présenter une forme plane ou circulaire en section transversale.

Leurs diamètres extérieurs sont légèrement plus grands que les orifices 8 de la douille 7 de façon à tenir au montage par serrage sur les bords desdits orifices.

Les joints 9 peuvent donc être montés à force dans les orifices 8 ou peuvent encore être adhérisés sur la douille.

Une telle adhérisation peut être commodément réalisée sur une tôle plane et découpée 12, visible sur la figure 6, cette tôle comportant des orifices 8 et étant ensuite roulée en cône de façon à obtenir la douille visible sur la figure 3.

L'avantage d'une douille de forme tronconique, telle que visible sur la figure 3, réside dans le montage. La douille 7 avec ses joints 9 est introduite dans le corps 4, et ensuite on fait pénétrer l'extrémité 3, également tronconique, de l'arbre 1 dans le corps 4. Pendant presque toute la pénétration, il n'y a pas contact entre l'extrémité 3 de l'arbre 1 et les joints 9, donc pas de risque d'entraînement et de sortie des joints 9 de leurs orifices 8. Autrement dit, l'écrasement des joints 9 se produit lors des derniers millimètres de l'assemblage visible sur la figure 1.

On a donc réalisé suivant l'invention un dispositif de raccordement avec étanchéité de hauteur réduite, qui évite l'usinage de gorges annulaires dans l'arbre et/ou le corps, et qui trouve une application avantageuse dans les cylindres de suspension de véhicule automobile.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Dispositif de raccordement étanche entre un corps et un arbre monté dans ce corps, et du type comprenant des moyens assurant l'étanchéité du raccordement entre plusieurs conduits (2) ménagés dans l'arbre (1) et plusieurs entrées de fluide (6) ménagées dans le corps (4) et communiquant respectivement avec lesdits conduits, caractérisé en ce que lesdits moyens d'étanchéité sont constitués par des joints toriques (9) montés respectivement dans des orifices (8) ménagés radialement dans une douille (7) interposée entre l'arbre (1) et le corps, chaque orifice (8) assurant la communication entre un conduit (2) de l'arbre (1) et une entrée de fluide (6) du corps, et les entrées de fluide (6) dans le corps (4) étant toutes réparties radialement dans un même plan perpendiculaire à l'arbre (1).

2. Dispositif selon la revendication 1, caractérisé en ce que les joints toriques (9) possèdent en section transversale un diamètre supérieur à l'épaisseur de la douille (7).

3. Dispositif selon la revendication 1 ou 2, caractérisé en ce que les joints toriques (9) sont munis d'une queue (11) permettant leur orientation par rapport aux orifices (8) de la douille (7) dans lesquels ils sont montés.

4. Dispositif selon l'une des revendications 1 à 3, caractérisé en ce que la douille précitée (7) est fendue (10) et réalisée par enroulement d'une tôle plane (12) découpée à la forme et percée pour réaliser les orifices précités.

5. Dispositif selon l'une des revendications 1 à 4, caractérisé en ce que les joints toriques (9) sont adhérisés à la douille (7) avant enroulement de la tôle.

6. Dispositif selon l'une des revendication 1 à 5, caractérisé en ce que la douille précitée (7) présente une forme tronconique de même que l'extrémité (3) de l'arbre (1) engagée dans le corps (4).

7. Cylindre de suspension de véhicule automobile, caractérisé en ce qu'il est équipé d'un dispositif de raccordement selon l'une des revendications 1 à

**Patentansprüche**

1. Vorrichtung zur dichten Verbindung zwischen einem Körper und einer in diesem Körper angeordneten Welle und derjenigen Gattung mit die Dichtheit des Anschlusses zwischen mehreren in der Welle (1) gebildeten Kanälen (2) und mehreren in dem Körper (4) gebildeten und jeweils mit den besagten Kanälen in Verbindung stehenden Einlässen (6) für fliessfähige Medien bewirkenden Mitteln, dadurch gekennzeichnet, dass die besagten Dichtungsmittel durch jeweils in in einer zwischen der Welle (1) und dem Körper zwischengefügten Hülse (7) radial gebildeten Oeffnungen (8) angeordnete O-Ring-Dichtungen (9) gebildet werden, wobei jede Oeffnung (8) die Verbindung zwischen einem Kanal (2) der Welle (1) und einem Einlass (6) für fliessfähiges Medium des Körpers gewährleistet und die Einlässe (6) für fliessfähige Medien in dem Körper (4) alle in einer selben senkrecht zur Welle (1) verlaufenden Ebene radial verteilt sind.

2. Vorrichtung nach Anspruch 1, dadurch gekennzeichnet, dass die O-Ring-Dichtungen (9) im Querschnitt einen grösseren Durchmesser als die Dicke der Hülse (7) besitzen.

3. Vorrichtung nach Anspruch 1 oder 2, dadurch gekennzeichnet, dass die O-Ring-Dichtungen (9) mit einem Ansatz (11) versehen sind, der deren Ausrichtung im Bezug auf die Oeffnungen (8) der Hülse (7) in welchen sie angeordnet sind, gestattet.

4. Vorrichtung nach einem der Ansprüche 1 bis 3, dadurch gekennzeichnet, dass die vorgennante Hülse (7) gespalten (10) ist und durch das Einrollen eines gestaltungsgemäss ausgeschnittenen und zur Bildung der vorgenannten Oeffnungen durchbohrten flachen Bleches (12) gebildet wird.

5. Vorrichtung nach einem der Ansprüche 1 bis 4, dadurch gekennzeichnet, dass die O-Ring-Dichtungen (9) an die Hülse (7) vor dem Einrollen des Bleches angehaftet sind.

6. Vorrichtung nach einem der Ansprüche 1 bis 5, dadurch gekennzeichnet, dass die vorgenannte Hülse (7) sowie das Ende (3) der in den Körper (4) eingreifenden Welle (1) eine kegelstumpfförmige Gestalt aufweisen.

7. Zylinder zur Aufhängung eines Kraftfahrzeugs, dadurch gekennzeichnet, dass er mit einer Anschlussvorrichtung gemäss einem der Ansprüche 1 bis 6 ausgestattet ist.

**Claims**

1. Device for the fluid-tight junction between a body and a shaft mounted within this body and of the type comprising means providing for the fluid-tightness of the connection between several ducts (2) formed in the shaft (1) and several fluid inlets (6) formed in the body (4) and communicating with the said ducts, respectively, characterized in that the said fluid-tightening means are constituted by O-ring seals (9) mounted in openings (8), respectively, formed radially in a bush (7) interposed between the shaft (1) and the body, each opening (8) ensuring the communication between one duct (2) of the shaft (1) and one fluid inlet (6) of the body and the fluid inlets (6) in the body (4) being all radially distributed in a same plane perpendicular to the shaft (1).

2. Device according to claim 1, chararterized in that the O-ring seals (9) have in cross-section a diameter greater than the thickness of the bush (7).

3. Device according to claim 1 or 2, characterized in that the O-ring seals (9) are provided with a lug (11) allowing their orientation with respect to the openings (8) of the bush (7) into which they are mounted.

4. Device according to one of claims 1 to 3, characterized in that the aforesaid bush (7) is split (10) and made by rolling up a flat metal sheet (12) cut to shape and pierced to form the aforesaid openings.

5. Device according to one of claims 1 to 4, characterized in that the O-ring seals (9) are adhered to the bush (7) before rolling up the metal sheet.

6. Device according to one of claims 1 to 5, characterized in that the aforesaid bush (7) exhibits a frusto-conical shape as well as the end (3) of the shaft (1) inserted into the body (4).

7. Automotive vehicle suspension cylinder, characterized in that it is fitted with a coupling device according to one of claims 1 to 6.

Fig. 1

Fig. 2

Fig. 3

Fig. 4

Fig. 5

Fig. 6